# EUROPÄISCHE PATENTANMELDUNG

(11) **EP 1 528 815 A2**
(43) Veröffentlichungstag der Anmeldung: **04.05.2005**
(21) Anmeldenummer: 04090390.8
(22) Anmeldetag: 11.10.2004
(51) Int. Cl.: H04N 9/11, H04N 5/253

(54) **Filmscanner**

(30) Priorität: 03.11.2003 DE 10351705
(71) Anmelder: Deutsches Zentrum für Luft- und Raumfahrt e.V., 53175 Bonn (DE)
(72) Erfinder: Dr. Andreas Eckardt, 12524 Berlin (DE); Dr. Hans Driescher, 15562 Rudersdorf (DE)
(74) Vertreter: Effert, Bressel und Kollegen

(57) **Zusammenfassung**

Die Erfindung betrifft einen Filmscanner (1) zum Digitalisieren von Filmen, umfassend eine breitbandige Lichtquelle, eine Filmbühne (2), die mindestens einen Lichtdurchlass (3) aufweist, eine Abbildungsoptik und photoelektrische Sensoren, die mindestens einen R-, G- und B-Kanal bilden, wobei der Filmscanner (1) auf der der Lichtquelle abgewandten Seite der Filmbühne (2) mindestens ein lichtspaltendes Element (5-8, 31, 34, 36) aufweist, wobei die Teilstrahlen (10-14) auf die zugeordneten photoelektrischen Sensoren (20-24, 38-41) abgebildet werden, wobei die Teilstrahlen durch die lichtspaltenden Elemente und/oder durch den photoelektrischen Sensoren zugeordnete Filter in entsprechende spektral gefilterte Teilstrahlen umgewandelt werden, wobei die photoelektrischen Sensoren (20-24, 38-41) als TDI-Sensoren ausgebildet sind.

## Beschreibung

Die Erfindung betrifft einen Filmscanner zum Digitalisieren von Filmen gemäß dem Oberbegriff des Patentanspruchs 1.

Bekannte photosensitive Systeme setzen CCD- oder CMOS-Sensoriken zur Abtastung von Filmmaterialien ein. Ein Hauptmangel besteht in der vom Sensor selbst vorgegebenen Ausleserate und der dazu angepassten Integrationszeit. Das Problem, welches sich stellt, ist die Verkürzung des Abtastvorganges, um eine Echtzeitfähigkeit zu implementieren. Dabei ist weiter zu berücksichtigen, dass der Lichtstrom der Beleuchtungsquelle nicht beliebig erhöhbar ist, da dies zu einem großen Wärmeeintrag in das Filmmaterial führt.

Aus der DE 197 31 530 A1 ist ein Filmabtaster mit einer Abtastvorrichtung zur optischen Abtastung von Perforationsböden und einer Auswerteeinrichtung bekannt, die dazu vorgesehen ist, die Abtastwerte der Perforationslöcher mit Referenzmustern zu vergleichen, um ein Korrektursignal zur Kompensation von Bildstandsfehlern zu erzeugen, wobei die Auswertevorrichtung dazu vorgesehen ist, in einer Vielzahl von Berechnungsschritten Abtastwerte und die Werte des Referenzmusters gegeneinander zu versetzen und bei jedem Berechnungsschritt den Grad der Überdeckung von Abtastwerten und Referenzmustern zu ermitteln, um aus dem absoluten Versatz von Abtastwerten und Referenzmuster, für den die beste Überdeckung von Abtastwerten und Referenzmuster ermittelt wurde, das Korrektursignal zu erzeugen. Zur Erzeugung eines RGB-Bildes umfasst der Filmabtaster einen R-, G- und B-Sensor, die nebeneinander angeordnet sind. Bei dieser bekannten Vorrichtung stellt sich das Problem, dass die erzeugten R-, G- und B-Kanäle durch den räumlichen Versatz zueinander gematcht werden müssen, da die R-, G- und B-Bilder nicht gleichzeitig ermittelt werden.

Der Erfindung liegt daher das technische Problem zugrunde, einen Filmscanner zu schaffen, mittels dessen in Echtzeit gleichzeitig die R-, G- und B-Bilder aufnehmbar sind.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu weist der Filmscanner auf der der Lichtquelle abgewandten Seite der Filmbühne mindestens ein lichtspaltendes Element auf, wobei die Teilstrahlen auf die zugeordneten photoelektrischen Sensoren abgebildet werden, wobei die Teilstrahlen durch die lichtspaltenden Elemente und/oder durch den photoelektrischen Sensoren zugeordnete Filter in entsprechende spektral gefilterte Teilstrahlen umgewandelt werden, wobei die photoelektrischen Sensoren als TDI-Sensoren ausgebildet sind. Derartige ladungsgekoppelte Bausteine mit Zeitverzögerungs- und Integrationsfunktion sind beispielsweise aus der DE 197 39 249 A1 bekannt. Durch die Verlängerung der Integrationszeit kann die Dynamik ohne Erhöhung des Lichtstromes erhöht werden, wobei auch die Verringerung des Lichtstromes für die R-, G- und B-Kanäle aufgrund des lichtspaltenden Elementes kompensiert werden kann.

In einer bevorzugten Ausführungsform besteht das lichtspaltende Element aus zwei Spiegeln, wobei ein erster Teilstrahl vom ersten Spiegel auf einen dichroitischen Filter mit nachgeordnetem Spiegel gelenkt wird, wobei jeweils in Abstrahlrichtung des dichroitischen Filters und des Spiegels für den reflektierten Teil ein photoelektrischer Sensor angeordnet ist, wobei der Spektralkanal des dem Spiegel zugeordneten Sensors dem Spektralbereich des dichroitischen Filters zugeordnet ist. Dabei wird ausgenutzt, dass ein dichroitischer Filter nur das Licht eines bestimmten Spektralbereiches passieren lässt und den Rest des Lichtes wieder reflektiert. Hierdurch kann der Lichtstrom der Lichtquelle besser ausgenutzt werden. Ist beispielsweise der dichroitische Filter als Rot-Filter ausgebildet, so gelangt der gesamte Rot-Anteil des vom Spiegel des lichtspaltenden Elementes zugeführten Lichtstrahls auf den hinter dem dichroitischen Filter angeordneten Spiegel und wird auf den zugeordneten photoelektrischen Sensor für den R-Kanal abgebildet. Das gesamte übrige Licht (ohne den Rotanteil) wird vom dichroitischen Filter auf den anderen Sensor abgebildet, wo ein gewünschter Spektralanteil ausgefiltert werden kann, beispielsweise für den G-Kanal.

In einer weiteren bevorzugten Ausführungsform wird das Durchlassvermögen des dichroitischen Filters derart gewählt, dass eine ungleichförmige spektrale Verteilung der Lichtquelle und/oder spektrale Empfindlichkeitsunterschiede der Sensoren kompensiert werden.

In einer weiteren bevorzugten Ausführungsform wird der zweite Teilstrahl des vom zweiten Spiegel des lichtspaltenden Elementes auf einen teildurchlässigen Spiegel des mit nachgeordnetem Spiegel gelenkt, wobei jeweils in Abstrahlrichtung des teildurchlässigen Spiegels und des Spiegels für den reflektierten Teil ein photoelektrischer Sensor angeordnet ist, wobei mindestens einem Sensor ein Filter zugeordnet ist.

Vorzugsweise ist dabei dem dem Spiegel zugeordneten Sensor ein Filter zugeordnet, der weiter vorzugsweise als Blau-Filter ausgebildet ist. Der dem teildurchlässigen Spiegel zugeordnete Sensor ist dabei weiter vorzugsweise als panchromatischer Sensor oder als NIR-Sensor zugeordnet. Hierdurch kann mit einfachen Mitteln die geringe spektrale Empfindlichkeit für den blauen Spektralanteil kompensiert werden. Hierzu wird beispielsweise der teildurchlässige Spiegel derart ausgelegt, dass dieser ca. 10% der Strahlung reflektiert und 90% durchlässt, wobei diese 90% durch den Spiegel auf den Sensor mit dem Blau-Filter reflektiert werden.

In einer alternativen Ausführungsform ist auf der der Lichtquelle abgewandten Seite der Filmbühne eine Kollimator-Optik angeordnet, hinter der mindestens zwei teildurchlässige Spiegel und ein Spiegel angeordnet sind, so dass der Lichtstrahl in mindestens drei Teilstrahlen zerlegt wird, wobei in der Abstrahlrichtung der reflektierten Teilstrahlen jeweils ein photoelektrischer Sensor mit zugeordnetem Filter angeordnet ist.

Vorzugsweise wird dabei die Teildurchlässigkeit der Spiegel derart gewählt, dass eine ungleichförmige spektrale Verteilung der Lichtquelle und/oder unterschiedliche Wirkungsgrade der Filter und/oder spektrale Empfindlichkeitsunterschiede der Sensoren kompensiert werden.

Die Erfindung wird nachfolgend anhand eines bevorzugten Ausführungsbeispieles näher erläutert. Die Fig. zeigen:
- Fig. 1: eine schematische Darstellung einer ersten Ausführungsform eines Filmscanners und
- Fig. 2: eine schematische Darstellung einer zweiten Ausführungsform eines Filmscanners.

Der Filmscanner 1 umfasst eine Filmbühne 2 mit einem spaltförmigen Lichtdurchlass 3. Über diese Filmbühne 2 wird ein nicht dargestellter Film bewegt und von einer ebenfalls nicht dargestellten breitbandigen Lichtquelle durchstrahlt. Hinter dem Lichtdurchlass 3 ist eine Kollimator-Optik 4 angeordnet. Hinter der Kollimator-Optik 4 sind vier teildurchlässige Spiegel 5-8 und ein Spiegel 9 angeordnet. Im Strahlengang des jeweils reflektierten Teilstrahls 10-14 ist jeweils eine Abbildungsoptik 15-19 angeordnet, in deren Fokalebene jeweils ein photoelektrischer Sensor 20-24 angeordnet ist. Die Sensoren 20-24 sind dabei als TDI-Zeilensensoren ausgebildet, die quer zur Filmtransportrichtung angeordnet sind. Dabei ist dem Sensor 20 ein Blau-Filter, dem Sensor 21 ein Grün-Filter, dem Sensor 22 ein Rot-Filter und dem Sensor 23 ein NIR-Filter zugeordnet. Die teildurchlässigen Spiegel 5-8 wirken dabei als einfache Strahlteiler bzw. lichtaufspaltende Elemente. Im Allgemeinen lässt sich sagen, dass der Blau-Anteil der üblichen Weißlichtquellen geringer ist als der Grünoder Rot-Anteil. Gleiches gilt für die Empfindlichkeit der Sensoren. Durch Einstellung des Durchlassvermögens der teildurchlässigen Spiegel 5-8 kann dies nun kompensiert werden. Hierzu wird beispielsweise 30% der einfallenden Strahlung am teildurchlässigen Spiegel 5 zum Sensor 20 reflektiert und 70% zum teildurchlässigen Spiegel 6 transmittiert. Durch entsprechende Einstellung des Transmissionsvermögens der teildurchlässigen Spiegel kann dabei der einfallende Lichtstrahl beispielsweise derart aufgeteilt werden, dass der Teilstrahl 10 30%, der Teilstrahl 11 25%, der Teilstrahl 12 20%, der Teilstrahl 13 15%, und der Teilstrahl 14 10% des einfallenden Lichtstrahls aufweist. Der Sensor 24 erzeugt ein panchromatisches Bild. Sind nun die Sensoren 20-24 zueinander kalibriert angeordnet, werden gleichzeitig das R-, G-, B-, NIR- und das panchromatische Bild erzeugt. Somit entfällt jegliches Matchen der einzelnen Bilder zueinander.

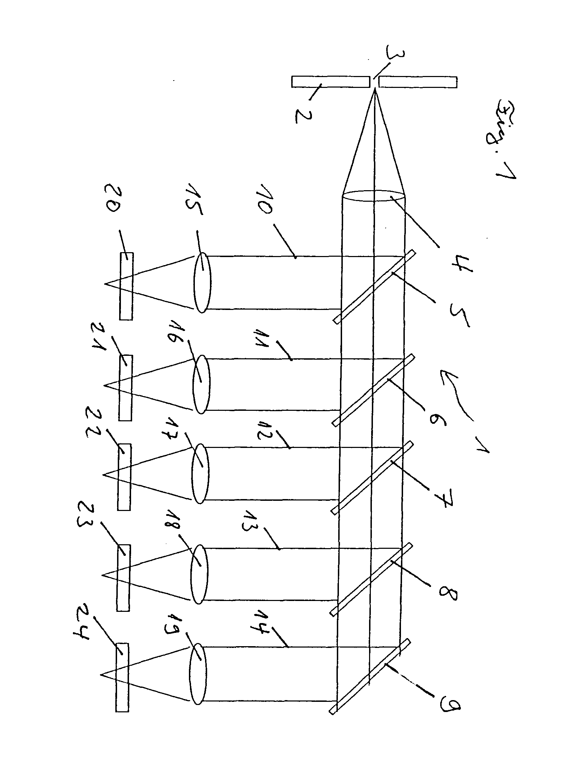

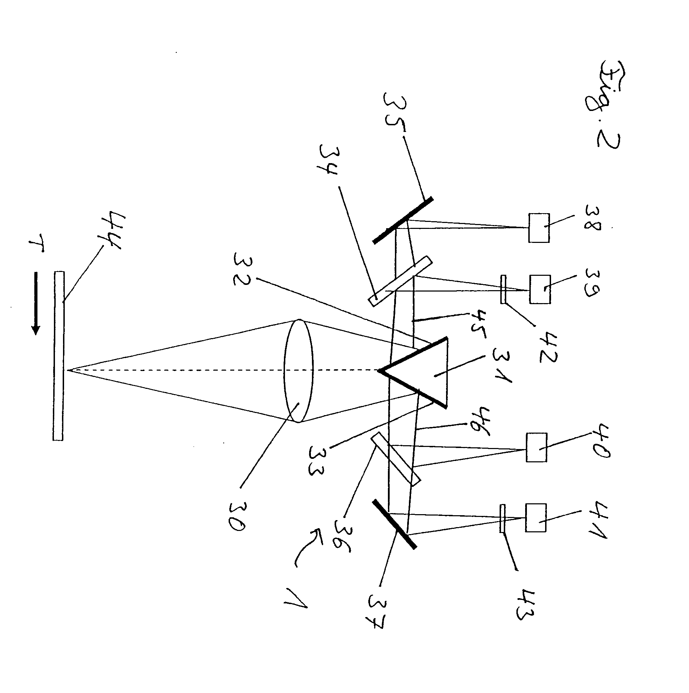

In der Fig. 2 ist eine alternative Ausführungsform dargestellt. Dabei umfasst der Filmscanner 1 ein Objektiv 30, ein lichtspaltendes Element 31 mit zwei Spiegeln 32, 33, einen dichroitischen Filter 34, einen Spiegel 35, einen teildurchlässigen Spiegel 36, einen Spiegel 37 sowie vier TDI-Sensoren 38-41. Dabei ist der Sensor 38 für den Rot-Kanal, der Sensor 39 für den Grün-Kanal, der Sensor 40 für den panchromatischen Kanal und der Sensor 41 für den Blau-Kanal vorgesehen. Der dichroitische Filter 34 ist dabei als Rotdurchlassfilter ausgebildet. Vor dem Sensor 39 ist ein Grün-Filter 42 und vor dem Sensor 41 ein Blau-Filter 43 angeordnet. Die Sensoren 38-41 sind wieder quer zur Bewegungsrichtung T des Films 44 angeordnet, wobei der Film 44 wie in der Ausführungsform gemäß Fig. 1 von einer breitbandigen Lichtquelle durchstrahlt wird, wobei ein Lichtdurchlass in der Filmbühne über das Objektiv 30 abgebildet wird. Der spaltförmige Lichtdurchlass wird über das Objektiv 30 auf das lichtspaltende Element 31 abgebildet und in zwei Teilstrahlen 45 und 46 zerlegt. Die Zerlegung ist dabei vorzugsweise symmetrisch, d.h. die beiden Teilstrahlen weisen jeweils die halbe Intensität des Eingangslichtstrahls auf. Der erste Teilstrahl 45 wird auf den dichroitischen Filter 34 gelenkt, wobei der Rot-Anteil den dichroitischen Filter 34 passiert, auf den Spiegel 35 fällt und auf dem Sensor 38 abgebildet wird. Der restliche Teil des Teilstrahls 45 wird am dichroitischen Filter 34 reflektiert und trifft auf den Grün-Filter 42. Der grüne Spektralanteil passiert den Grün-Filter 42 und gelangt zum Sensor 39. Dabei versteht es sich, dass der Rot- und Grün-Kanal auch vertauscht werden können, wobei dann der Durchlassbereich des dichroitischen Filters entsprechend angepasst werden muss. Im dargestellten Beispiel wurde auf einen separaten Rot-Filter vor dem Sensor 38 verzichtet. Es sind jedoch Ausführungen denkbar, wo zusätzlich ein Rot-Filter vor dem Sensor 38 angeordnet wird, beispielsweise um Streulicht zu unterdrücken. Der zweite Teilstrahl 46 wird vom zweiten Spiegel 33 auf den teildurchlässigen Spiegel 36 reflektiert. Dieser reflektiert einen Teil seiner Strahlung, beispielsweise 10% auf den panchromatischen Sensor 40, wohingegen 90% transmittiert werden und auf den Blau-Filter 43 reflektiert werden. Der blaue Spektralanteil passiert dann den Blau-Filter 43 und gelangt zum Sensor 41. Durch die Einstellung des Transmissionsvermögens des teildurchlässigen Spiegels 36 können dann wieder spektrale Ungleichförmigkeiten der Lichtquelle und spektrale Unterschiede hinsichtlich der Empfindlichkeit der Sensoren 38-41 kompensiert werden.

## Patentansprüche

1. Filmscanner zum Digitalisieren von Filmen, umfassend eine breitbandige Lichtquelle, eine Filmbühne, die mindestens einen Lichtdurchlass aufweist, eine Abbildungsoptik und photoelektrische Sensoren, die mindestens einen R-, G- und B-Kanal bilden,
**dadurch gekennzeichnet, dass**
der Filmscanner (1) auf der der Lichtquelle abgewandten Seite der Filmbühne (2) mindestens ein lichtspaltendes Element (5-8, 31, 34, 36) aufweist, wobei die Teilstrahlen (10-14) auf die zugeordneten photoelektrischen Sensoren (20-24, 38-41) abgebildet werden, wobei die Teilstrahlen durch die lichtspaltenden Elemente und/oder durch den photoelektrischen Sensoren zugeordnete Filter in entsprechende spektral gefilterte Teilstrahlen umgewandelt werden, wobei die photoelektrischen Sensoren (20-24, 38-41) als TDI-Sensoren ausgebildet sind.

2. Filmscanner nach Anspruch 1, **dadurch gekennzeichnet, dass** das lichtspaltende Element (31) aus zwei Spiegel (32, 33) besteht, wobei ein erster Teilstrahl (45) vom ersten Spiegel (32) auf einen dichroitischen Filter (34) mit nachgeordnetem Spiegel (35) gelenkt wird, wobei jeweils in Abstrahlrichtung des dichroitischen Filters (34) und des Spiegels (35) für den reflektierten Teil ein photoelektrischer Sensor (38, 39) angeordnet ist, wobei der Spektralkanal des dem Spiegel (35) zugeordneten Sensors (38) dem Spektralbereich des dichroitischen Filters (34) zugeordnet ist.

3. Filmscanner nach Anspruch 2, **dadurch gekennzeichnet, dass** das Durchlassvermögen des dichroitischen Filters (34) derart gewählt wird, dass eine ungleichförmige spektrale Verteilung der Lichtquelle und/oder spektrale Empfindlichkeitsunterschiede der Sensoren (38-41) kompensiert werden.

4. Filmscanner nach einem der vorangegangenen Ansprüche, **dadurch gekennzeichnet, dass** das lichtspaltende Element (31) aus zwei Spiegel (32, 33) besteht, wobei ein zweiter Teilstrahl (46) vom zweiten Spiegel (33) auf einen teildurchlässigen Spiegel (36) mit nachgeordnetem Spiegel (37) gelenkt wird, wobei jeweils in Abstrahlrichtung des teildurchlässigen Spiegels (36) und des Spiegels (37) für den reflektierten Teil ein photoelektrischer Sensor (40, 41) angeordnet ist, wobei mindestens einem Sensor (41) ein Filter (43) zugeordnet ist.

5. Filmscanner nach Anspruch 4, **dadurch gekennzeichnet, dass** dem dem Spiegel (37) zugeordneten Sensor (41) ein Filter (43) zugeordnet ist.

6. Filmscanner nach Anspruch 5, **dadurch gekennzeichnet, dass** der Filter (43) als Blau-Filter ausgebildet ist.

7. Filmscanner nach einem der vorangegangenen Ansprüche, **dadurch gekennzeichnet, dass** auf der der Lichtquelle abgewandten Seite der Filmbühne eine Kollimator-Optik (4) angeordnet ist, hinter der mindestens zwei teildurchlässige Spiegel (5-8) und ein Spiegel (9) angeordnet sind, so dass der Lichtstrahl in mindestens drei Teilstrahlen (10-14) zerlegt wird, wobei in der Abstrahlrichtung der reflektierten Teilstrahlen (10-14) jeweils ein photoelektrischer Sensor (20-24) angeordnet ist, wobei mindestens drei Sensoren (20-22) ein Filter zugeordnet ist.

8. Filmscanner nach Anspruch 7, **dadurch gekennzeichnet, dass** die Teildurchlässigkeit der Spiegel (5-8) derart gewählt wird, dass eine ungleichförmige spektrale Verteilung der Lichtquelle und/oder unterschiedliche Wirkungsgrade der Filter und/oder spektrale Empfindlichkeitsunterschiede der Sensoren (20-24) kompensiert werden.
